# EUROPEAN PATENT SPECIFICATION

(11) **EP 1 754 660 B1**
(45) Date of publication and mention of the grant of the patent: **11.03.2009**
(21) Application number: 06254165.1
(22) Date of filing: 08.08.2006
(51) Int. Cl.: B64D 39/04

(54) **Flexible air refueling boom extendable tube**
Luftbetankungssonde mit einem flexiblen und ausfahrbaren Rohr
Sonde de ravitaillement en vol avec un tube flexible et extensible

(30) Priority: 19.08.2005 US 208343
(43) Date of publication of application: 21.02.2007
(73) Proprietor: The Boeing Company, Chicago, IL 60606-1596 (US)
(72) Inventor: Von Thal, German, Santa Maria California 93455 (US)
(74) Representative: McLeish, Nicholas Alistair Maxwell

(56) References cited:
- WO-A-20/06085985
- WO-A-20/07044021
- GB-A- 724 092
- GB-A- 2 228 771
- US-A- 2 859 002
- US-A- 3 108 769
- US-A- 5 906 336

## Description

### FIELD OF THE INVENTION

The present invention relates to an airborne mobile platform refueling boom having a flexible, pressure responsive end tube.

### BACKGROUND OF THE INVENTION

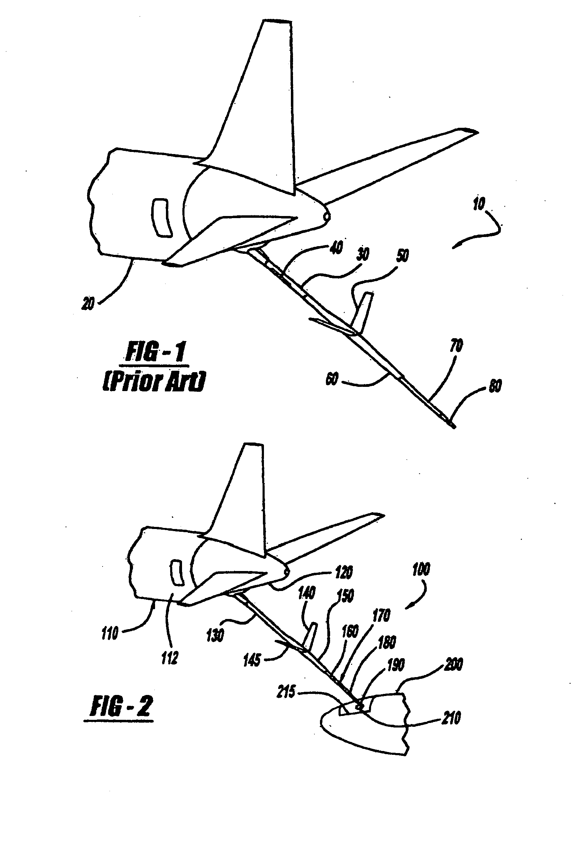

Aircraft refueling booms are well known in the art; however, each is associated with its share of limitations. For instance, Figure 1 depicts a tail section of the aircraft 20 equipped with an extendible rigid aircraft refueling boom 10 that suffers from several limitations. For instance, when the nozzle 80 of the rigid refueling boom 10 is positioned using the control vanes 50, the refueling boom 10 can withstand only a limited amount of in-flight movement during the actual refueling process when the nozzle 80 resides within a receiver aircraft (not shown). If such movement occurs when the nozzle 80 is in the receiver aircraft, the refueling boom 10 may undergo undesirable stress at any of a multitude of boom locations such as at the point where the boom upper section 30 meets the aircraft 20, where the retractable boom portion 70 retracts into the boom lower section 60, or where the nozzle 80 inserts into a receiver aircraft (not shown). Regardless of whether such in-flight movement is vertical or horizontal, the refueling boom 10 may undergo undesirable stress at the noted locations. If boom overstressing occurs, repairing the boom requires removal of the complete refueling boom 10 from the aircraft 20.

While overstressing of the boom may result while physically manipulating the boom during a refueling event, damage of the boom at the conclusion of refueling may also occur due to a fluid shock load. More specifically, if the maximum refueling pressure of the refueling boom is exceeded, then the boom may suffer the effects of "water-hammer" during receiver aircraft refueling. In order to lessen the effects of water-hammer, an internal fuel dynamic shock absorber bladder 40 is typically required in existing refueling booms. However, repairing and replacing such a bladder 40 is time consuming and expensive because removal of the entire refueling boom 10 is required for such a repair. Additionally, replacement or repair of the bladder 40 also results in the aircraft being out of service for an extended period of time since extensive repair hours are generally necessary. This aircraft downtime increases the overall cost of repair of the bladder 40 and the life-cycle cost of the refueling boom.

A need exists then for an aircraft refueling boom that does not suffer from the above limitations. This in turn, will result in a flexible aircraft refueling boom portion that is capable of accepting horizontal and vertical movements without subjecting the refueling boom to stressful loads during in-flight refueling maneuvering; a boom tube that is capable of expanding and absorbing shock loads attributable to fuel momentum pressure build up due to abrupt fuel starts and shut-offs to a receiver aircraft; a boom tube portion that can be quickly and easily removed from the aircraft and either repaired or replaced resulting in decreased aircraft downtime compared to existing refueling booms.
US 5,906,336, US 2,859,002, WO 2007/044021, US 3,108,769 and WO 2006/085985 describe in-flight refuelling systems that include a hose placed between a host aircraft and a receiving aircraft.
GB 724 092 describes an aircraft interconnecting mechanism having a fuel delivery nozzle where a metallic corrugated tube is bonded to the nozzle and a nozzle tip to act as a seal around a universal joint placed between the nozzle and nozzle tip.

### SUMMARY OF THE INVENTION

In accordance with an aspect of the present invention there is provided a refuelling apparatus according to the accompanying claims. An airborne mobile platform refuelling boom is disclosed. The refuelling boom is typically used in connection with a refuelling tanker aircraft, although the refuelling boom could be employed with any form of refuelling mobile platform, and is therefore not limited to use with just aircraft. In one embodiment the refuelling boom utilizes an upper boom tube that connects to an aircraft underside, a lower boom tube that connects to the upper boom tube, and a removable flexible tube with a nozzle that is connected to the lower boom tube. The flexible tube is bendable to accommodate movement of the tanker aircraft relative to a receiver mobile aircraft during in-flight refuelling of the receiver aircraft. Also, when the flexible tube bends, it signifies to a boom operator that the flexible tube is under a stress load. The flexible tube is also expandable about its longitudinal axis to absorb loading forces due to the conservation of momentum of the fuel being shut off or on during a refuelling event. The expandable, flexible tube eliminates shock loads and pressure spikes in other areas of the refueling boom due to the expandability of the flexible tube.

A ruddervator is attached to the refueling boom to permit aerial control of the upper, lower and flexible tubes prior to and during refueling. The flexible tube is individually removable from the refueling boom, without removing the balance of the boom from the aircraft, to facilitate convenient and cost-effective maintenance. The removal of the flexible tube may be by a threaded connection, a push-on pull-off type connection, or other suitable mechanical quick disconnect method. In another embodiment, the entire refueling boom tube is either a rigid tube or a flexible, bendable hose with an additional end hose or tube that is expandable, resilient and equipped to be quickly connected and disconnected to the main refueling boom tube. A flexible, bendable and expandable tube eliminates the need for an internal shock bladder of prior art refueling booms.

The features, functions, and advantages can be achieved independently in various embodiments of the present invention or may be combined in yet other embodiments.

### BRIEF DESCRIPTION OF THE DRAWINGS

The present invention will become more fully understood from the detailed description and the accompanying drawings, wherein:

Figure 1 is a perspective view of an aircraft tail section employing a rigid refueling boom with an internal shock bladder, according to the prior art;

Figure 2 is a perspective view of an aircraft tail section employing a refueling boom with a flexible extendable air refueling boom tube according to the teachings of the present invention;

Figure 3 is a perspective view of a refueling boom with a flexible, expandable, and extendable air refueling boom end tube according to the teachings of the present invention;

Figure 4 is a perspective view of a flexible, expandable air refueling boom end tube according to the teachings of the present invention;

Figure 5 is a perspective view of a flexible, expandable air refueling boom end tube in an expanded condition according to the teachings of the present invention;

Figure 6 is a perspective view of a flexible boom tube having a flexible, expandable air refueling boom end tube according to a second embodiment of the teachings of the present invention; and

Figure 7 is a perspective view of a basket style fuel receptacle to which the flexible air refueling boom tube of the present invention can be applied.

### DETAILED DESCRIPTION OF THE PREFERRED EMBODIMENTS

The following description of various preferred embodiments is merely exemplary in nature and is in no way intended to limit the invention, its application, or uses.

An in-flight refueling boom according to the teachings of the present invention is generally depicted in Figure 2 at reference numeral 100. A first end of the refueling boom 100 attaches to a tanker aircraft 110, usually at the aircraft tail section 120. The connection of the refueling boom 100 to the tanker aircraft 110 is normally a rigid connection that permits movement in the vertical direction, that is, a vertical plane through which the refueling boom 100 can move or pivot.

In an in-flight refueling operation, the refueling boom 100 is moved, known as "flying" the boom, by an operator, known as a "boomer", in a vertical plane by manipulating control vanes 140, 145, referred to throughout the following discussion as "ruddervators" 140, 145. The control vanes 140, 145 are termed "ruddervators" 140, 145 because they act as a rudder and an elevator for maneuvering the refueling boom 100 when the refueling boom 100 is maneuvered into position over a receiver mobile platform, such as a receiver aircraft 200.

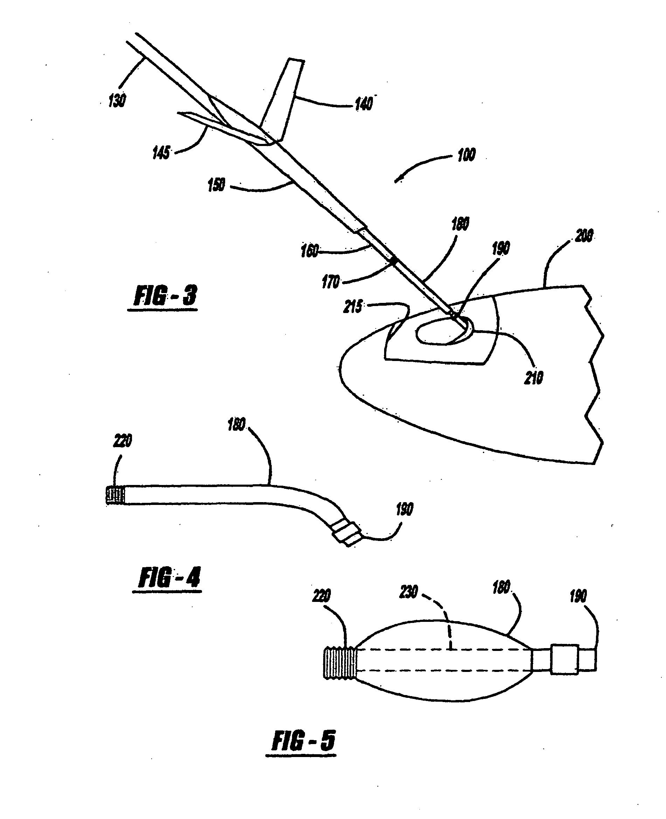

Continuing with the description of the refueling boom 100, Figure 2 and Figure 3 depict a main refueling tube 130 that is attached to the tanker aircraft 110. On the main refueling tube 130 are the attached ruddervators 140, 145, which are used to maneuver the refueling boom 100 into position for refueling the receiver aircraft 200. Although the refueling boom 100 is easily maneuvered in a vertical plane, the refueling boom can also be maneuvered laterally to a small degree.

Continuing with reference to Figures 2 through 5, in operation, the refueling boom 100 is supported from a fuselage 112 of the tanker aircraft 110 and maneuvered over a receiver aircraft 200 so that the receiver aircraft 200 can receive liquid fuel from the supply or tanker aircraft 110. Just before refueling, the refueling boom 100 is positioned over, yet slightly in front of, the receiver aircraft 200 using the ruddervators 140, 145. As this event occurs, the retractable refueling tube 160 may be extended from within a distal end of the main refueling tube 130, relative to the tanker aircraft 110. The rigid retractable refueling tube 160 has a connection portion 170 that is used to connect the retractable refueling tube 160 and a flexible refueling tube 180. The connection portion 170 may be any acceptable means of coupling two fluid-carrying tubes. For example, a threaded connection may be used such that the flexible refueling tube 180 may have male or female threads on an end while the retractable refueling tube 160 would have the opposite of either male or female threads. The connection method could also be a push-pull type of quick connection apparatus such that the flexible refueling tube 180 could push onto the retractable refueling tube 160 for coupling. These connection methods would allow for the advantage of a quick connection of the flexible refueling tube 180 to the end of the retractable refueling tube 160 to facilitate maintenance, such as nozzle replacement, on the flexible refueling tube 180, or quick replacement of the flexible refueling tube 180 upon completion of its life cycle.

At the end of the flexible refueling tube 180 opposite to the connection portion 170, is a nozzle 190. The nozzle 190 permits the flexible refueling tube 180 to lock into the receiver aircraft 200 to transfer fuel to the receiver aircraft 200. The receiver aircraft 200 has a receiver area 215 that contains a nozzle receiver 210, also known as a nozzle dock, for securely receiving the nozzle 190. The flexible refueling tube 180 permits the nozzle 190 to remain in the nozzle receiver 210 even when the tanker aircraft 110 is moving vertically to the extent permissible according to the flexible limit of the flexible refueling tube 180. That is, an advantage of the flexible refueling tube 180 is that either the tanker aircraft 110 or the receiver aircraft 200 can move in a vertical plane while refueling is taking place without jeopardizing the integrity of the refueling operation. Furthermore, the tanker aircraft 110 may also move laterally, or horizontally, since the flexible refueling tube 180 permits movement in both planes. This is a significant advantage over prior art refueling booms that normally have very limited horizontal movement capabilities. Additionally, the flexible refueling tube 180 will permit movement from the nozzle receiver 210 location in nearly any direction. To elaborate, once the nozzle 190 is connected to the nozzle receiver 210, the tanker aircraft 110 is free to move laterally relative to the original longitudinal hook-up axis of the refueling boom 100. Finally, because the flexible refueling tube 180 is flexible, curvilinear motion of the tanker aircraft relative to the nozzle receiver 210 is also possible.

Although various directions of motion are permitted by the flexible refueling tube 180, one advantage of the flexible refueling tube 180 over existing refueling tubes is the ability of a boomer to visually witness the bending and subsequently eliminate the bending by flying the boom to a different position relative to the nozzle receiver 210. Because of such an advantage, the flexible refueling tube 180 also eliminates the need for sensors used in conjunction with a conventional automatic load alleviation system (ALAS) (not shown) on the tanker aircraft 110. An optional ALAS monitors stresses and loading in existing refueling booms during in flight refueling since such stresses and loading can not be accurately gauged by the naked eye by simply viewing a rigid tube.

Figure 3 depicts the flexible refueling tube 180 in a straight condition, while Figure 4 depicts the flexible refueling tube 180 in a bent condition. Figure 5 depicts the flexible refueling tube 180 in an expanded condition. Figure 4 depicts the flexible nature of the flexible refueling tube 180 when it is placed under a load that is not coincident with the longitudinal axis of the flexible refueling tube 180. The flexible refueling tube 180 is permitted to flex in response to a situation in which the tanker aircraft 110 may move in a vertical plane, horizontal plane, or a combination of such, relative to the nozzle receiver 210. When the flexible refueling tube 180 is permitted to flex, nozzle loads and stresses are significantly reduced or eliminated.

Figure 5 depicts the expansive nature of the flexible refueling tube 180, which illustrates another advantage of the present invention. An explanation of the pressure that the liquid aviation fuel creates in the boom tube will now be discussed. For all practical purposes, liquid fuel is not compressible and as a result, any energy that is applied to it is instantly transmitted to surrounding structure. This energy becomes dynamic in nature when a force such as a quick closing valve applies velocity to the fluid. Surge or "water hammer" is the result of a sudden change in liquid velocity. Water hammer usually occurs when a transfer system is quickly started, stopped or is forced to make a rapid change in direction. These events can cause undesired stresses to be placed on a liquid fuel transfer system such as an in-flight refueling boom. However, the flexible refueling tube 180 is designed to absorb the shock associated with any water hammer that occurs during an in-flight refueling operation.

When the fuel flow is shut off during refueling, the fuel pressure spike resulting from the momentum of the fuel mass is absorbed and reduced by the expansion of the flexible refueling tube 180. As depicted in Figure 5, the flexible refueling tube 180 is seen in its expanded (i.e., albeit exaggerated) condition, while its unexpanded geometry is depicted in phantom at 230. Such an expansion occurs between the quick-connect threaded end 220, which connects to the retractable refueling tube 160, and the nozzle 190, which connects to the nozzle receiver 210. The primary cause of water hammer during in-flight refueling is by closing a fuel valve, whether manually or automatically. Such a fuel valve may be located at the aircraft, where the refueling boom 100 meets the aircraft 110, or at the nozzle receiver 210 of the receiver aircraft 200.

A fuel valve that quickly closes, depending upon valve size and system conditions, may cause an abrupt stoppage of fuel flow that generates a fuel pressure spike or acoustic wave in the refueling boom 100. The fuel pressure spike can be a multitude of times higher than the fuel system working pressure during steady-state refueling. The expandable, flexible refueling tube 180 will expand like a balloon in accordance with the pressure changes in such a re-fueling event when a valve is suddenly opened or closed, relative to the steady-state flow. For instance, steady-state refuelling pressure is normally below 379 kilopascal (55 psi); however, the spike pressure in the refueling boom 100. which results when a valve is suddenly opened or closed, may approach 1654 kilopascal (240 psi). The pressure at which the expandable flexible refuelling tube 180 may begin to expand may be just above 379 kilopascal (55 psi). Of course the actual fuel pressure at which the expandable, flexible tube 180 may begin to expand may vary with the material used for the expandable, flexible refueling tube 180.

When the fuel pressure exceeds 379 kilopascal (55 psi), for example, a boom operator will be able to visually witness the physical expansion of the expandable, flexible refueling tube 180. The expandable, flexible refueling tube 180 can be made of any rubber or rubber-like material that is suitable for the transfer of liquid aircraft fuel. As such, an advantage of the expandable, flexible tube 180 is the elimination of the need for a separate internal bladder that is typically used with existing refueling booms. This also eliminates the need to remove a traditional boom from an aircraft to replace such a bladder, and furthermore, permits quick and easy connection of a replacement expandable, flexible refueling tube 180 according to the present invention.

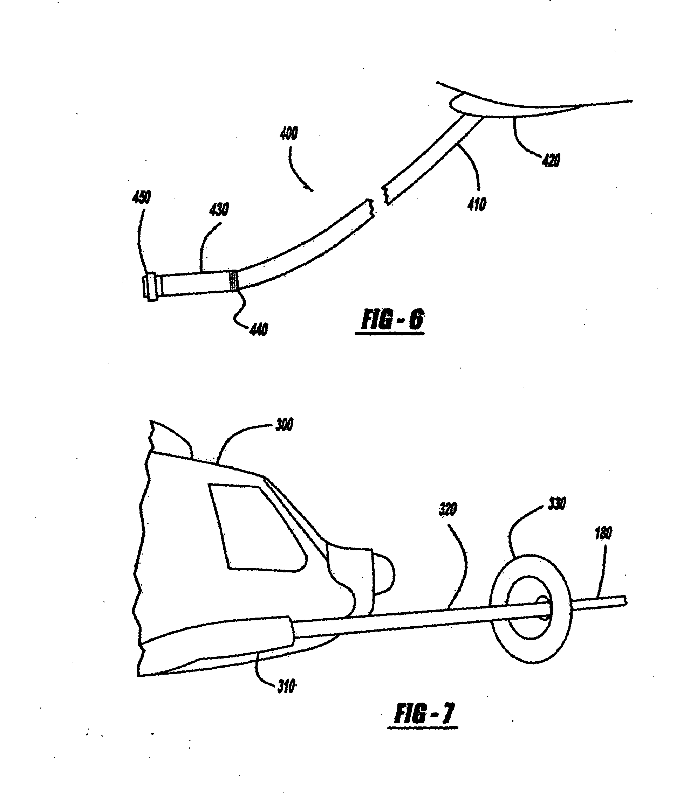

Figure 6 depicts a second embodiment of the present invention. In the second embodiment, a refueling boom tube 400 is connected to the aircraft 420 and may entail an upper boom tube 410 and a lower boom tube 430. The lower boom tube 430 attaches to the upper boom tube 410 in one of several possible methods such as a threaded connection or a push-on pull-off type connection, or other suitable mechanical quick disconnect method. A nozzle 450 attaches to the lower boom tube 430 and is used in the same fashion as in the first embodiment, that is, the nozzle 450 is receivable by a nozzle receiver of an airborne mobile platform that is in need of refueling.

Continuing with reference to Figure 6, the upper boom tube 410 may be made of a flexible, bendable material, such as rubber, that is suited to carrying liquid aviation fuel. Alternatively, the upper boom tube 410 may be made from a semi-rigid rubber. These upper and lower boom tubes 410, 430 may be made of the same rubber material or rubber materials having different rigidity and expansion characteristics. This is in contrast to the rigid upper boom tube 150 of the first embodiment which may be made of metal. Continuing, the lower boom tube 430 of the second embodiment may be a resilient rubber or rubber-like material that is capable of bending, expanding, and absorbing shock loads due to the fuel momentum pressure accumulation situation created in the lower boom tube 430 during the opening or closing of fuel valves during the refueling of an in-flight aircraft. The upper and lower boom tubes 410, 430 may be connectable by a quick connection joint 440, such as a threaded connection or push-on pull-off type connection. Thus, the lower boom tube 430 performs in the same manner as the expandable, flexible refueling tube 180 of the first embodiment.

A general advantage of the second embodiment is the total overall flexibility of the refueling boom tube 400 when the upper boom tube 410 is connected to the lower boom tube 430. Another advantage is that the refueling boom tube 400 gains even greater flexibility than existing boom tubes, and the refueling boom 10 of the first embodiment, because both sections of the refueling boom tube 400 are flexible. This permits greater variation in the relative positions of the airborne mobile platforms during a refueling operation.

Figure 7 depicts a "capturing" or "basket" refueling system that receives fuel during refueling in a slightly different manner compared to the "flying boom" and nozzle system depicted in Figures 2 and 3. The teachings of the present invention may be used with either a nozzle receiver 210 or a basket type system. In the basket type system depicted in Figure 7, a rotorcraft (e.g. helicopter) 300 extends a rigid refueling boom 320 from a refueling boom receptacle 310. The rigid refueling boom 320 has a refueling basket 330 that receives the extendable, flexible refueling tube 180, 430 according to the first and second embodiments. The alignment of the tanker aircraft need only be changed to accommodate such a refueling basket 330.

## Claims

1. A refuelling apparatus for an airborne mobile platform (110,420), comprising:
a first refuelling tube (130,410) in communication with a bottom side of the airborne mobile platform (110,420) for transferring fuel from the airborne mobile platform (110,420); and
a second refuelling tube (180,430) in communication with the first refuelling tube, for communicating with a nozzle receiver of a receiver mobile platform for transferring fuel to the receiver mobile platform (200), wherein at least one of said first and second tubes is flexible and the second refuelling tube is arranged to expand when fuel pressure is just above 379 kilopascal (55 psi).

2. The refuelling apparatus of claim 1, wherein the first refuelling tube (130) comprises a rigid tube.

3. The refuelling apparatus of claim 1, wherein the first refuelling tube comprises a flexible hose (410).

4. The refuelling apparatus of claim 3, further comprising:
a nozzle (450) attached to the second refuelling tube (430), the nozzle (450) being engageable with the nozzle receiver of the receiver mobile platform (200) being refuelled.

5. A refuelling apparatus of claim 2 wherein the first refuelling tube (130) is arranged to be connected to the aircraft; and further comprising a lower refuelling boom tube (160) connected to the first refuelling tube; and the second refuelling tube (180) is connected to the lower refuelling boom tube.

6. The refuelling apparatus of claim 5, further comprising:
a nozzle (190) connected to the second refuelling tube to facilitate refuelling of a receiver aircraft.

7. The refuelling apparatus of claim 5, further comprising:
a ruddevator (140, 145) attached to the first refuelling tube (130) to permit aerial control of the first, lower and second tubes.

8. The refuelling apparatus of claim 5 further comprising:
means (170) for connecting the second refuelling tube (180) to the lower refuelling boom tube (160).

9. The refuelling apparatus of claim 5, wherein the lower refuelling boom tube (160) is retractable within the first refuelling boom tube (130) during in-flight refuelling.

10. The refuelling apparatus of claim 5 suitable for engaging
a nozzle dock (210) within a receiver aircraft for connecting to the nozzle during in-flight refuelling.

11. The refuelling apparatus of claim 5, wherein the second refuelling tube (180) permits vertical and lateral movement of the tanker aircraft relative to a receiver aircraft during in-flight refuelling.

12. The refuelling apparatus of claim 5, wherein the first refuelling tube (130) and the lower refuelling boom tube (160) are rigid.

## Patentansprüche

1. Betankungsvorrichtung für eine mobile Flugzeugplattform (110, 420), umfassend:
ein erstes Betankungsrohr (130, 410) in Kommunikation mit einer Unterseite der mobilen Flugzeugplattform (110, 420) zum Übertragen von Treibstoff von der mobilen Flugzeugplattform (110, 420); und
ein zweites Betankungsrohr (180, 430) in Kommunikation mit dem ersten Betankungsrohr zum Kommunizieren mit einem Düsenempfänger einer mobilen Empfängerplattform zum Übertragen von Treibstoff an die mobile Empfängerplattform (200), wobei mindestens entweder das erste oder das zweite Rohr flexibel ist und das zweite Betankungsrohr angeordnet ist, um zu expandieren, wenn der Treibstoffdruck direkt über 379 Kilopascal (55 psi) liegt.

2. Betankungsvorrichtung nach Anspruch 1, wobei das erste Betankungsrohr (130) ein starres Rohr umfasst.

3. Betankungsvorrichtung nach Anspruch 1, wobei das erste Betankungsrohr einen flexiblen Schlauch (410) umfasst.

4. Betankungsvorrichtung nach Anspruch 3, ferner umfassend:
eine Düse (450), die an dem zweiten Betankungsrohr (430) angebracht ist, wobei die Düse (450) in den Düsenempfänger der mobilen Empfängerplattform (200), die betankt wird, eingreifbar ist.

5. Betankungsvorrichtung nach Anspruch 2, wobei das erste Betankungsrohr (130) angeordnet ist, um mit dem Flugzeug verbunden zu werden; und ferner ein unteres Rohr des Betankungsauslegers (160) umfasst, das mit dem ersten Betankungsrohr verbunden ist; und das zweite Betankungsrohr (180) mit dem unteren Rohr des Betankungsauslegers verbunden ist.

6. Betankungsvorrichtung nach Anspruch 5, ferner umfassend:
eine Düse (190), die mit dem zweiten Betankungsrohr verbunden ist, um das Betanken eines Empfängerflugzeuges zu erleichtern.

7. Betankungsvorrichtung nach Anspruch 5, ferner umfassend:
ein kombiniertes Seiten- und Höhenruder (140, 145), das an dem ersten Betankungsrohr (130) angebracht ist, um die Luftsteuerung des ersten, des unteren und des zweiten Rohres zu erlauben.

8. Betankungsvorrichtung nach Anspruch 5, ferner umfassend:
Mittel (170) zum Verbinden des zweiten Betankungsrohres (180) mit dem unteren Rohr des Betankungsauslegers (160).

9. Betankungsvorrichtung nach Anspruch 5, wobei das untere Rohr des Betankungsauslegers (160) innerhalb des ersten Rohrs des Betankungsauslegers (130) während der Betankung im Flug ausfahrbar ist.

10. Betankungsvorrichtung nach Anspruch 5, die geeignet ist zum Einrasten eines Düsendocks (210) in einem Empfängerflugzeug zum Verbinden mit der Düse während der Betankung im Flug.

11. Betankungsvorrichtung nach Anspruch 5, wobei das zweite Betankungsrohr (180) eine vertikale und laterale Bewegung des Tankflugzeuges in Bezug auf ein Empfängerflugzeug während der Betankung im Flug erlaubt.

12. Betankungsvorrichtung nach Anspruch 5, wobei das erste Betankungsrohr (130) und das untere Rohr des Betankungsauslegers (160) starr sind.

## Revendications

1. Appareil de ravitaillement pour une plate-forme mobile en vol (110, 420) comprenant:
un premier tube de ravitaillement (130, 410) en communication avec un côté inférieur de la plate-forme mobile en vol (110, 420) pour transférer le combustible de la plate-forme mobile en vol (110, 420); et
un deuxième tube de ravitaillement (180, 430) en communication avec le premier tube de ravitaillement, pour la communication avec un récepteur de buse d'une plate-forme mobile de réception pour transférer le combustible à la plate-forme mobile de réception (200), où au moins un desdits premier et deuxième tubes est flexible, et ledit deuxième tube de ravitaillement est agencé pour s'expanser lorsque la pression du combustible est juste au-dessus de 379 kilopascals (55 psi).

2. Appareil de ravitaillement selon la revendication 1, où le premier tube de ravitaillement (130) comprend un tube rigide.

3. Appareil de ravitaillement selon la revendication 1, où le premier tube de ravitaillement comprend un tuyau flexible (410).

4. Appareil de ravitaillement selon la revendication 3, comprenant en outre:
une buse (450) fixée au deuxième tube de ravitaillement (430), la buse (450) pouvant être mise en prise avec un récepteur de buse de la plate-forme mobile de réception (200) en train d'être ravitaillée.

5. Appareil de ravitaillement selon la revendication 2, où le premier tube de ravitaillement (130) est agencé pour être connecté à l'avion; et comprenant en outre un tube de flèche de ravitaillement inférieur (160) relié au premier tube de ravitaillement; et le deuxième tube de ravitaillement (180) est relié au tube de flèche de ravitaillement inférieur.

6. Appareil de ravitaillement selon la revendication 5, comprenant en outre:
une buse (190) reliée au deuxième tube de ravitaillement pour faciliter le ravitaillement d'un avion de réception.

7. Appareil de ravitaillement selon la revendication 5, comprenant en outre:
une surface de commande formant gouverne et élévateur (140, 145) fixée au premier tube de ravitaillement (130) pour permettre la commande aérienne des premier, inférieur et deuxième tubes.

8. Appareil de ravitaillement selon la revendication 5, comprenant en outre: un moyen (170) pour relier le deuxième tube de ravitaillement (180) au tube de flèche de ravitaillement inférieur (160).

9. Appareil de ravitaillement selon la revendication 5, où le tube de flèche de ravitaillement inférieur (160) est rétractable dans le premier tube de flèche de ravitaillement (130) durant le ravitaillement en vol.

10. Appareil de ravitaillement selon la revendication 5, apte à venir en prise avec une pièce d'amarrage de buse (210) dans un avion de réception pour connecter la buse pendant le ravitaillement en vol.

11. Appareil de ravitaillement selon la revendication 5, où le deuxième tube de ravitaillement (180) permet un mouvement vertical et latéral de l'avion citerne relativement à un avion de réception durant le ravitaillement en vol.

12. Appareil de ravitaillement selon la revendication 5, où le premier tube de ravitaillement (130) et le tube de flèche de ravitaillement inférieur (160) sont rigides.
